# EUROPÄISCHE PATENTSCHRIFT

(11) **EP 0 754 482 B1**
(45) Veröffentlichungstag und Bekanntmachung des Hinweises auf die Patenterteilung: **02.10.2002**
(21) Anmeldenummer: 96110804.0
(22) Anmeldetag: 04.07.1996
(51) Int. Cl.: B01D 15/08

(54) **Chromatographische Säule**
Chromatographic column
Colonne chromatographique

(30) Priorität: 15.07.1995 DE 19525856; 02.04.1996 DE 19613161
(43) Veröffentlichungstag der Anmeldung: 22.01.1997
(73) Patentinhaber: MERCK PATENT GmbH, 64293 Darmstadt (DE)
(72) Erfinder: Müller, Hans D.J., Dr., 64839 Münster (DE); Delp, Axel, 64407 Fränkisch-Crumbach (DE); Spurk, Joseph H., Dr., 64287 Darmstadt (DE)

(56) Entgegenhaltungen:
- WO-A-85/05285
- US-A- 4 952 302
- US-A- 5 061 371
- US-A- 5 112 492

## Beschreibung

Die Erfindung betrifft einen verbesserten Säulenkopf für chromatographische Säulen, sowie chromatographische Säulen enthaltend einen erfindungsgemäßen Säulenkopf, sowie deren Verwendung, weiterhin Zusatzeinrichtungen für den Betrieb dieses Säulenkopfes.

Bei der Konstruktion einer Chromatographieanlage muß unter anderem das Problem gelöst werden, wie am Säulenkopf von dem geringen Strömungsquerschnitt der Elutionsmittel- und Probenzuleitung auf den wesentlich größeren Querschnitt der Vor- oder Trennsäule übergegangen wird. Dieser Übergang muß so gestaltet sein, daß die Probe keine Bandenverbreiterung durch ungleichmäßige Strömungen im Übergangsbereich erfährt. Für diesen Zweck sind verschiedene konstruktive Maßnahmen bekannt; dazu gehören Verteilerplatten mit eingefrästen Kanälen oder mehrlagige Fritten. Diese Konstruktionen sind jedoch aufwendig und nur von unvollkommener Wirkung. Ein weiteres Problem resultiert aus Druckschwankungen, die beispielsweise bei der Verwendung von Kolbenpumpen entstehen, und die ebenfalls zu ungleichmäßigem Strömungsverhalten führen. Als Abhilfe werden beispielsweise zusätzliche Pulsationsdämpfer in die Chromatographieanlage eingebaut. Diese Probleme sind bei Anlagen zur präparativen Chromatographie wegen der bei diesen Anlagen benutzten weiten Säulenquerschnitten (typischerweise > 2 cm) besonders gravierend.

Aus WO 85/05 285 ist ein kuppelförmig gestalteter Säulenkopf für chromatographische Säulen bekannt. Dieser Säulenkopf ist mit Flüssigkeit gefüllt.

Es wurde gefunden, daß durch die Verwendung eines neu gestalteten Säulenkopfes das Strömungsverhalten beim Auftragen der Probe wesentlich besser beherrschen läßt. Die erfindungsgemäße Konstruktion weist als weiteren Vorteil auf, daß Pulsationen im Elutionsmittelzulauf gedämpft werden, ohne daß ein getrennter Pulsationsdämpfer vorgesehen werden muß.

Gegenstand der Erfindung ist ein Säulenkopf für eine präparativ-chromatographische Säule gemäß Anspruch 1. Bevorzugte Ausführungsformen weisen zusätzlich eine Vorrichtung zum Messen des Flüssigkeitstandes in dem genannten Säulenkopf auf, wobei die Vorrichtung mindestens zwei Elektroden besitzt.

Gegenstand der Erfindung ist ferner die Verwendung des erfindungsgemäßen Säulenkopfes in einer chromatographischen Säule.

Gegenstand sind Verfahren zur elektrischen Messung des Flüssigkeitsstandes in dem erfindungsgemäßen Säulenkopf mittels Widerstands-, Impedanz- oder Kapazitätsmessung
Abbildung 1 zeigt den grundsätzlichen Aufbau eines erfindungsgemäßen Säulenkopfes.
In Abbildung 2 werden die Arbeitszyklen bei der Chromatographie unter Verwendung eines erfindungsgemäßen Säulenkopfes dargestellt.
Abbildung 3 zeigt beispielhaft vier Meßanordnungen, die es erlauben, den Flüssigkeitsstand in der Nähe der Fritte zu bestimmen.
Abbildung 4 zeigt die Wirkungsweise einer Meßanordnung bestehend aus zwei Metallfritten.
Abbildung 5 zeigt die Wirkungsweise einer Meßanordnung, die es erlaubt, das niedere Flüssigkeitsniveau an der Fritte und auch das im Elutionsbetrieb erhöhte Flüssigkeitsniveau zu messen und/oder zu regulieren.

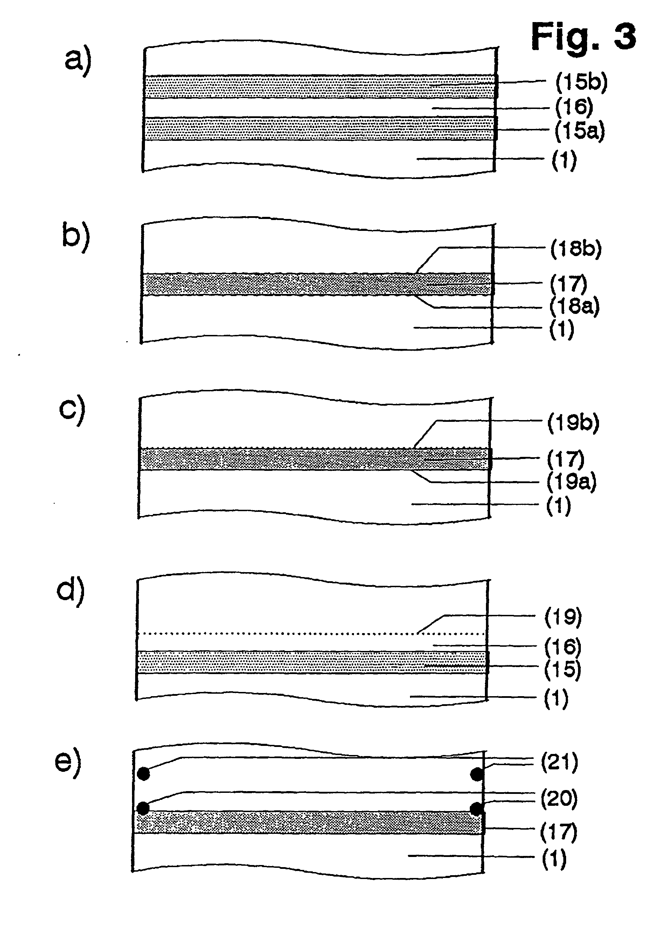

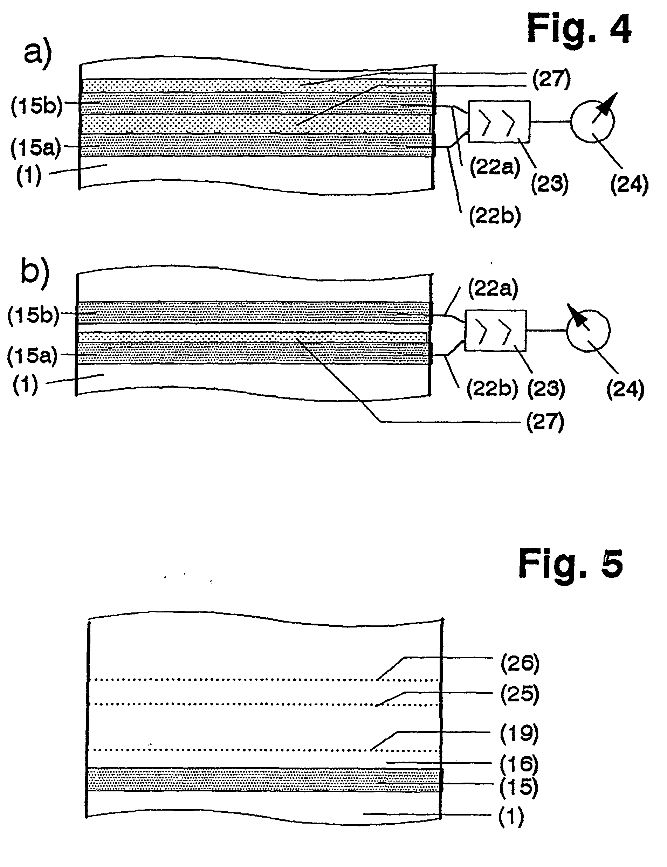

In den Abbildungen 3 und 5 sind die Zuleitungen zu den Elektroden nicht gezeigt.

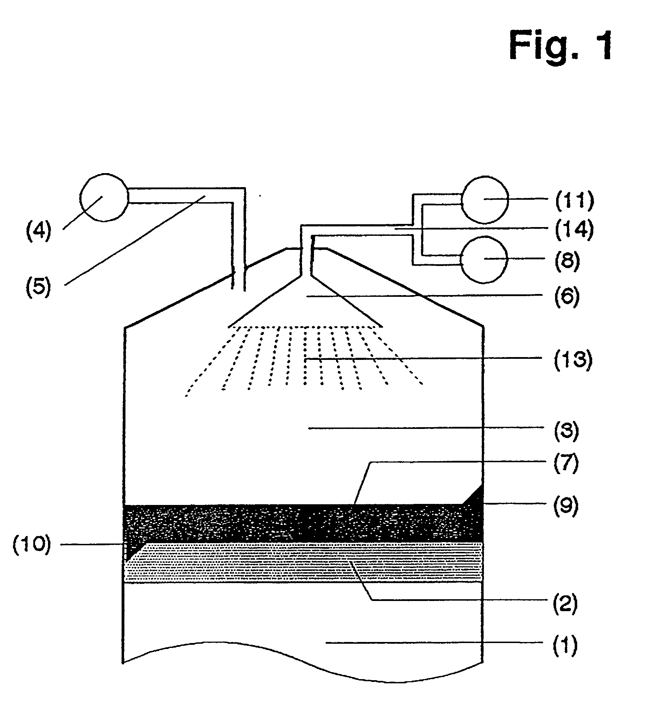

Die erfindungsgemäße Konstruktion des Säulenkopfes ist aus Abbildung 1 ersichtlich; dargestellt ist der obere Teil einer Trennsäule mit dem erfindungsgemäßen Säulenkopf: Auf dem Säulenbett (1) liegt eine Fritte (2) auf. Oberhalb der Fritte befindet sich ein Gasraum (3). Mit einer Druckvorrichtung (4) kann der Gasraum mit dem Arbeitsdruck über eine Zuleitung (5) beaufschlagt werden. Neben Luft sind insbesondere inerte Gase, wie z.B. Stickstoff oder Edelgase, wie z.B. Argon oder Krypton, für die Füllung des Gasraumes geeignet. In den Gasraum mündet die Zuleitung für Elutionsmittel und Probe, die beispielsweise als Sprühkopf (6) gestaltet sein kann. In einer abgewandelten Ausführungsform können jeweils für Elutionsmittel und Probe getrennte Zuleitungen vorgesehen sein. Elutionsmittel und/oder Probe können auch durch mehr als eine Leitung eingebracht werden. Entsprechend können auch mehrere Sprühköpfe vorgesehen werden.

Elutionsmittel und/oder Probe werden durch Überdruck gefördert; Vorrichtungen zum Erzeugen von Überdruck sind dem Fachmann bekannt, dazu gehören beispielsweise Pumpen oder Injektionsspritzen. In der weiteren Beschreibung werden beispielhaft für derartige Druckerzeugungsvorrichtungen Pumpen beschrieben.

Im Elutionsbetrieb und beim Äquilibrieren der Säule befindet sich oberhalb der Fritte (2) eine dünne Schicht (7) Elutionsmittel. Die Höhe dieser Schicht beträgt typischerweise weniger als das Doppelte des Säulendurchmessers. Die Förderleistung der Elutionsmittelpumpe (8) und der durch die Druckvorrichtung (4) erzeugte Arbeitsdruck werden so abgestimmt, daß die Höhe der Schicht (7) weitgehend konstant bleibt. Diese Regelung kann automatisch erfolgen, z.B. unter Verwendung eines Niveausensors (9). Die Sprühstrahlen (13) deuten das Einpumpen des Elutionsmittels an. Wegen der Kompressibilität des Gases im Gasraum (3) werden Pulsationen, die beispielsweise von der Elutionsmittelpumpe herrühren können, gedämpft.

Der Betrieb unter Verwendung des erfindungsgemäßen Säulenkopfes ist im folgenden beispielhaft beschrieben; bezüglich der Bezugszeichen ist auf Abbildung 1 verwiesen:
a) Zunächst wird die Zuführung von Elutionsmittel unterbrochen. Durch den Gasdruck wird das Elutionsmittel durch die Säule transportiert, bis es im Säulenkopf zum Niveau der oberen Frittenfläche abgesunken ist. Dieser Vorgang kann beispielsweise mittels eines zweiten Niveausensors (10) überwacht werden.
b) Die Probe wird durch Überdruck, beispielsweise erzeugt mittels einer Probenpumpe (11), aufgetragen, wobei sich eine Probenschicht (12) ausbildet.
c) Die Probenzufuhr, beispielsweise die Probenpumpe (11), wird ebenfalls abgeschaltet, bis die Probe durch den Gasdruck in die Säule eingebracht ist und die Probenschicht im Säulenkopf bis zum Niveau der oberen Frittenfläche abgesunken ist.
d) Anschließend wird der Durchsatz an Elutionsmittel erhöht, beispielsweise durch die Erhöhung der Pumpleistung der Elutionsmittelpumpe (8), bis wieder eine Elutionsmittelschicht (7) entstanden ist.
e) Zuletzt wird der Durchsatz an Elutionsmittel reduziert, beispielsweise durch Anpassung der Pumpleistung der Elutionsmittelpumpe (8), so daß die Elutionsmittelschicht (7) wie oben erläutert, während der Elution eine konstante Dicke aufweist.

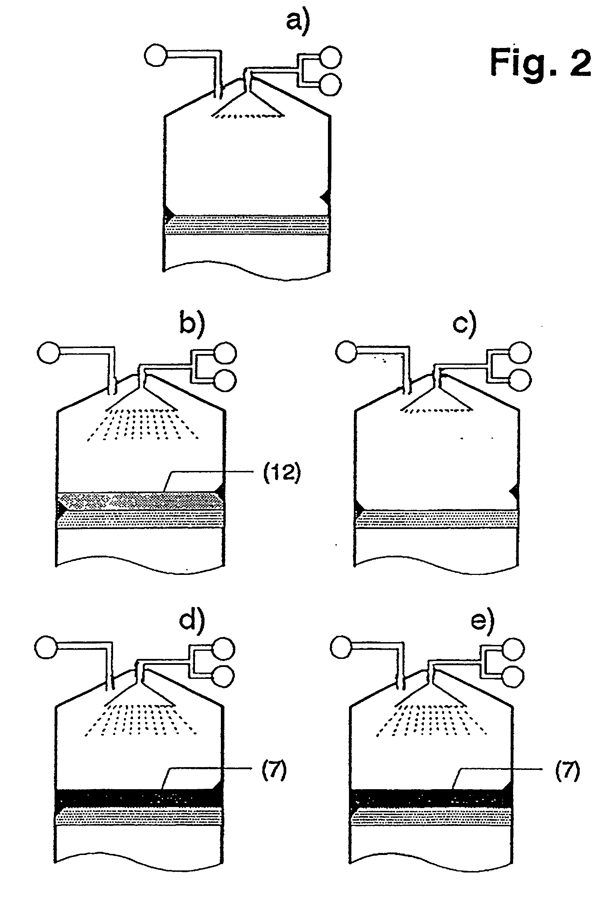

Diese Arbeitsschritte sind in Abbildung 2 dargestellt.

Durch die erfindungsgemäße Anordnung und das erfindungsgemäße Verfahren wird ein steilflankiges Dosierprofil der Probe und im Verlauf der Trennung ein steilflankiges Flußprofil erzielt. Außerdem werden Pulsationen der Pumpen durch die Kompressibilität des Gases im Gasraum gedämpft und die mechanische Belastung der Säulenpackung vermieden.

Die Chromatographie- und Kartuschenrohre, die im Zusammenhang mit der vorliegenden Erfindung benutzt werden können, besitzen die üblichen Abmessungen; d.h. für präparative Anwendungen betragen die Durchmesser ca. 2 cm bis zu ca. 1 m. Kleinere Durchmesser sind bei analytischen Anwendungen üblich. Für Vorsäulen oder für Säulen, die für Probenvorbereitung vorgesehen sind, werden kurze Säulen, d.h. etwa das 0,5- bis 2-fache des Säulendurchmessers verwendet. Längere Säulen sind als Trennsäulen üblich (5- bis 10-fache des Säulendurchmessers, z.T. noch länger).

Soweit diese Chromatographie- oder Kartuschenrohr aus durchsichtigen Material (z.B. Glas, Poly(meth)acrylaten) bestehen, oder mit Fenstern aus durchsichtigem Material ausgestattet sind, kann die Einstellung des Flüssigkeitsniveaus oberhalb der Fritte visuell erfolgen. Bei undurchsichtigen Rohrmaterialien oder für automatische Steuerungen können Niveausensoren in den Säulenkopf integriert werden. Dem Fachmann sind Prinzipien und Ausführungsformen für geeignete Niveausensoren bekannt. Dazu gehören Sensoren, die auf der Messung der Leitfähigkeit oder der Dielektrizitätskonstante beruhen, und auch Sensoren, die eine berührungsfreie Messung erlauben. Letztere können beispielsweise auf der Reflexion eines Lichtstrahles oder auf Abstandsmessungen mittels Ultraschall beruhen. Das Ausgangssignal der Sensoren kann entweder angezeigt werden oder als Regelgröße in einer automatischen Regelvorrichtung verwendet werden. Geeignete Meß-, Anzeige- und Regelvorrichtungen sind dem Fachmann auch aus anderen technischen Gebieten bekannt. Beispielhaft seien genannt: die Druckschrift DE 43 42 272, in der eine Meßanordnung zur optischen Bestimmung des Niveaus offenbart wird, sowie die Druckschrift DE 42 20 714, in der eine Meßanordnung zur Bestimmung des Niveaus mittels Ultraschall offenbart wird.

Die Einstellung des Flüssigkeitsniveaus im Säulenkopf in Abhängigkeit von Volumenstrom des Elutionsmittels oder der Probe und des Arbeitsdruckes im Säulenkopf kann manuell gesteuert werden, wobei das Flüssigkeitsniveau wie oben beschrieben entweder direkt beobachtet wird oder durch Sensoren gemessen und angezeigt wird. Soweit das Flüssigkeitsniveau mit Sensoren erfaßt wird, kann das Flüssigkeitsniveau auch automatisch geregelt werden.

Eine bevorzugte Meßanordnung für die Messung des Flüssigkeitsstandes in dem Säulenkopf wird im folgenden beschrieben; das Meßverfahren beruht auf der Messung des elektrischen Widerstandes oder der Impedanz oder auf Kapazitätsmessung.

Die Meßvorrichtung besteht aus mindestens zwei Elektroden, die einen Flüssigkeitsstrom durch die Säule erlauben. Beispielhaft seien genannt: Metallfritten, metallisierte Fritten aus Glas oder Keramik, Spanndrähte oder Drahtnetze. Im Falle von Kapazitätsmessungen ist es möglich, die Elektroden mit einer Isolierung zu versehen. Für Impedanz- oder Widerstandsmessungen ist es ausreichend, wenn die Elektroden nur einen kleinen Teil des Säulenquerschnittes ausmachen; beispielsweise können dann die Elektroden als Drahtringe ausgeführt sein.

Da die Messung des Flüssigkeitsstandes am oberen Ende des Sorbensbettes, das heißt in Höhe des Niveausensors (10), besonders kritisch ist, wird zumindest dort eine Meßeinrichtung vorgesehen, die es erlaubt, den Flüssigkeitsstand zu bestimmen. Eine zweite Meßeinrichung befindet sich gegebenenfalls in Höhe des Niveausensors (9). Der Niveausensor (9) kann auch in einer Weise ausgelegt sein, daß er eine tolerierbare Varianz des Flüssigkeitstandes erlaubt. Es ist grundsätzlich möglich, einzelne Elektroden, beiden Niveausensoren (9) und (10) gemeinsam zuzuordnen.

Die Widerstands- oder Impedanzmessung setzt voraus, daß Probelösung und Elutionsmittel elektrisch leitend sind. Die Messung ist grundsätzlich mittels Gleichstrom möglich, jedoch wird die Messung mit Wechselstrom bevorzugt, um Polarisationserscheinungen an den Elektroden zu vermeiden. Die Optimierung der Meßparameter Strom, Spannung und Frequenz, sowie geeignete Meßeinrichtungen, wie z.B. Brückenschaltungen, sind dem Fachmann geläufig.

Die Kapazitätsmessung beruht darauf, daß sich die Kapazität eines Kondensators ändert, wenn ein Dielektrikum zwischen seine Elektroden eingebracht wird. Geeignete Meßprinzipien für die Messung der Änderung der Kapazität sind dem Fachmann bekannt, dazu kann der Kondensator beispielsweise Teil eines elektrischen Schwingkreises oder einer Kapazitätsmeßbrücke sein. Weitere Meßprinzipien sind dem Fachmann bekannt. Wenn die Elektroden gegen die Lösung mit einem elektrisch isolierenden Überzug versehen sind, können Störungen durch elektrisch leitende Probelösungen oder Elutionsmittel verringert werden.

Die Elektroden der erfindungsgemäßen Vorrichtung bestehen aus Metallen, z.B. Edelstahl oder Edelmetallen; sie können auch aus anderen elektrisch leitfähigen Materialien, z.B. Graphit, bestehen. Außerdem ist es möglich, die Elektroden durch Beschichtung eines elektrisch isolierenden Materials, z.B. Glas, Kunststoff oder Keramik, mit einem elektrisch leitfähigen Material herzustellen. Grundsätze der Materialauswahl und der Herstellungsverfahren sind dem Fachmann bekannt.

Die Elektroden sind mit Zuleitungen versehen, die aus dem Säulenkopf oder der Chromatographiesäule herausgeführt sind, und die die Verbindung zum Meßverstärker, zur Anzeige- und/oder Regeleinrichtung herstellen.

Das Ausgangssignal der Meßeinrichtung wird nach bekannten Prinzipien verstärkt und kann entweder angezeigt oder als Regelgröße in einer automatischen Regelvorrichtung verwendet werden. Geeignete Verstärker, sowie Anzeige- und Regelvorrichtungen sind dem Fachmann bekannt.

Die Meßanzeige erlaubt es, in Abhängigkeit von Volumenstrom des Elutionsmittels oder der Probe und des Arbeitsdruckes im Säulenkopf entsprechend der Instrumentenanzeige manuell den Flüssigkeitsstand zu steuern. Unter Verwendung einer Regeleinrichtung kann das Flüssigkeitsniveau auch automatisch geregelt werden.

In Abbildung 3 sind beispielhaft fünf Elektrodenanordnungen dargestellt, die sich insbesondere für die Messung des Flüssigkeitsstandes am oberen Endes des Sorbensbettes eignen; diese Vorrichtungen entsprechen folglich dem Niveausensor (10):
a) Die Fritte über dem Sorbensbett (1) ist geteilt, die metallenen Teilfritten (15a) und (15b) umschließen einen Raum (16); die Teilfritten sind elektrisch isoliert voneinander montiert.
b) Eine Fritte (17) aus isolierendem Material ist an beiden Seiten mit je einer flüssigkeitsdurchlässigen elektrisch leitfähigen Schicht (18a) und (18b), z.B. aus einem Edelmetall, versehen.
c) Eine Fritte (17) aus isolierendem Material ist an beiden Seiten mit je einem Drahtgeflecht oder mit Spanndrähten (19a) und (19b), z.B. aus Edelstahl, versehen. Bei der Verwendung von Spanndrähten sind die einzelnen Spanndrähte (19a) elektrisch leitend miteinander verbunden; gleiches gilt für die Spanndrähte (19b).
d) Das Sorbensbett (1) ist mit einer metallenen Fritte (15) abgeschlossen; über der Fritte befindet sich ein Drahtgeflecht (19).
e) Das Sorbensbett (1) ist mit einer Fritte (17) abgeschlossen. Auf ihrer Oberfläche befindet sich eine ringförmige Drahtelektrode (20); eine zweite ringförmige Drahtelektrode (21) befindet sich etwas oberhalb der Fritte (17). Falls bei dieser Anordnung eine Metallfritte vorgesehen ist, kann die Fritte die Funktion der Elektrode (20) übernehmen; somit kann dann die Anordnung ohne die Elektrode (20) ausgeführt werden.

Die Elektrodenanordnungen a), b), c) und d) sind sowohl für Kapazitätsmessungen als auch für Widerstands- oder Impedanzmessungen geeignet. Die Anordnung e) eignet sich für Widerstands- oder Impedanzmessungen. Die Zuleitungen sind in dieser Abbildung nicht dargestellt.

Abbildung 4 verdeutlicht die Anzeigevorgänge für die Steuerung des Flüssigkeitsniveaus an der Grenze des Sorbensbettes (1); dabei wird eine Meßeinrichtung nach Abbildung 3a) vorausgesetzt. Zuleitungen (22a) und (22b) sind schematisch dargestellt und verbinden dieTeilfritten (15a) und (15b) mit dem Verstärker (23) und der Anzeigevorrichtung (24). Diese Meßanordnung erlaubt die Messung der Kapazität.

Abbildung 4a) stellt einen Abschnitt des Arbeitszyklus dar, bei dem sich ein erhöhter Flüssigkeitsstand ((27); Elutionsmittel oder Probe) über dem Sorbensbett befindet (vergleiche dazu Abbildung 2b), 2d) und 2e)). Da die Flüssigkeiten eine höhere Dielektrizitätskonstante als Luft aufweisen, wird eine hohe Kapazität gemessen.

Abbildung 4b) stellt einen Abschnitt des Arbeitszyklus dar, bei dem der Flüssigkeitsstand ((27); Elutionsmittel oder Probe) über dem Sorbensbett erniedrigt ist (vergleiche dazu Abbildung 2a) und 2c)). Dabei wird eine niedrige Kapazität gemessen.

Abbildung 5 verdeutlicht beispielhaft eine Anordnung mit mehreren Elektroden, die es erlaubt, sowohl den erhöhten Flüssigkeitsstand als auch den Flüssigkeitsstand an der Grenze des Sorbensbettes (1) zu messen und anzuzeigen, sowie gegebenenfalls zu regeln. Die Zuleitungen sind in dieser Abbildung nicht dargestellt. Diese Vorrichtung ist eine Erweiterung der in Abbildung 3d) dargestellten Vorrichtung. Zusätzliche Drahtnetze (25) und (26) befinden sich oberhalb des Drahtnetzes (19). Die Drahtnetze (25) und (26) bilden den oberen Niveausensor (9). Gemessen werden folgende Kapazitäten:
a) zwischen der Fritte (15) und dem Drahtnetz (19);
b) zwischen den Drahtnetzen (19) und (25);
c) zwischen den Drahtnetzen (25) und (26).

In dem Betriebszuständen, wie sie in Abbildung 2a) und c) dargestellt sind, sind alle gemessenen Kapazitäten niedrig. Die erniedrigte Kapazität zeigt somit an, daß das Absenken des Flüssigkeitsspiegels im Säulenkopf erfolgt ist. In den übrigen Betriebszuständen nach Abbildung 2 sind die Kapazitäten der Meßstrecken a) und b) erhöht. Die erhöhte Kapazität der Meßstrecken a) und b) zeigt folglich an, daß der erhöhte Flüssigkeitsspiegel erreicht ist und aufrechterhalten wird. Die Kapazität der Meßstrecke c) erhöht sich nur, wenn der Flüssigkeitsspiegel übermäßig ansteigt. In diesem Fall müßte die Pumpleistung der Elutionsmittelpumpe (8) zurückgenommen werden.

In entsprechender Weise kann diese Meßanordnung bei Verwendung von elektrisch leitenden Elutions- und Lösungsmitteln auch zur Messung des elektrischen Widerstandes oder der Impedanz dienen. In diesem Fall zeigt ein erniedrigter Widerstand an, daß sich Flüssigkeit zwischen den Elektroden befindet.

Die Verbindung von Elutionsmittelstrom und Probenstrom kann durch eine T-Verbindung (14) oder durch ein Umschaltventil oder im Säulenkopf erfolgen.

Druckvorrichtungen, die geeignet sind, einen Gasraum mit einem Arbeitsdruck zu beaufschlagen, sind dem Fachmann bekannt. Dazu gehören beispielsweise Gaspumpen und Gasdruckbehälter, die zusätzlich eine Regelvorrichtung aufweisen können.

## Patentansprüche

1. Säulenkopf einer präparativ-chromatographischen Säule mit mindestens einer Leitung für Elutionsmittel und/oder Probe und einem Gasraum (3) und einer Fritte (2) oberhalb des Sorbensbettes (1), **dadurch gekennzeichnet, daß** eine Vorrichtung (4) vorgesehen ist, die es erlaubt, den genannten Gasraum (3) mit einem Gas unter Überdruck zu beaufschlagen, wobei die genannte Vorrichtung (4) getrennt von der genannten Leitung für Elutionsmittel und/oder Probe angeordnet ist.

2. Säulenkopf nach Anspruch 1, weiterhin **dadurch gekennzeichnet, daß** in den Gasraum mindestens eine Leitung gemeinsam für Elutionsmittel und Probe einmündet.

3. Säulenkopf nach Anspruch 1, weiterhin **dadurch gekennzeichnet, daß** in den Gasraum mindestens je eine Leitung für Elutionsmittel und Probe einmünden.

4. Säulenkopf nach einem der Ansprüche 1 bis 3, weiterhin **dadurch gekennzeichnet, daß** die Einmündungen der Leitungen für Elutionsmittel und/oder Probe als Sprühköpfe ausgeführt sind.

5. Säulenkopf nach einem der Ansprüche 1 bis 4, weiterhin **dadurch gekennzeichnet, daß** der Säulenkopf mit mindestens zwei Elektroden ausgestattet ist, mit deren Hilfe der Flüssigkeitsstand im Säulenkopf gemessen wird.

6. Säulenkopf nach Anspruch 5, weiterhin **dadurch gekennzeichnet, daß** die Elektroden von zwei parallelen elektrisch leitfähigen Teilfritten (15a) und (15b), die einen flachen Raum (16) umschließen, gebildet werden.

7. Säulenkopf nach Anspruch 5, weiterhin **dadurch gekennzeichnet, daß** die Elektroden von der elektrisch leitfähigen Teilfritten (15) und einem Drahtgeflecht (19) gebildet werden, die zusammen einen flachen Raum (16) umschließen.

8. Verwendung eines Säulenkopfes nach einem der Ansprüche 1 - 7 in einer chromatographischen Säule.

9. Verfahren zur Feststellung des Flüssigkeitsstandes in einem Säulenkopf nach einem der Ansprüche 5 bis 7, **dadurch gekennzeichnet, daß** der Flüssigkeitsstand durch die Änderung der Kapazität gemessen wird.

10. Verfahren zur Feststellung des Flüssigkeitsstandes in einem Säulenkopf nach einem der Ansprüche 5 bis 7, **dadurch gekennzeichnet, daß** der Flüssigkeitsstand durch die Änderung der elektrischen Leitfähigkeit oder Impedanz gemessen wird.

## Claims

1. Column head of a preparative chromatography column with at least one line for eluent and/or sample and a gas space (3) and a frit (2) above the sorbent bed (1), **characterized in that** a device (4) is provided which makes it possible to apply a gas under overpressure to the said gas space (3), the said device (4) being arranged separately from the said line for eluent and/or sample.

2. Column head according to Claim 1, furthermore **characterized in that** at least one line in common for element and sample enters the gas space.

3. Column head according to Claim 1, furthermore **characterized in that** at least one line each for element and sample enters the gas space.

4. Column head according to one of Claims 1 to 3, furthermore **characterized in that** the entries of the lines for eluent and/or sample are configured as spray heads.

5. Column head according to one of Claims 1 to 4, furthermore **characterized in that** the column head is equipped with at least two electrodes, with the aid of which the liquid level in the column head is measured.

6. Column head according to Claim 5, furthermore **characterized in that** the electrodes are formed by two parallel electrically conductive sub-frits (15a) and (15b), which enclose a flat space (16).

7. Column head according to Claim 5, furthermore **characterized in that** the electrodes are formed by the electrically conductive sub-frits (15) and a wire mesh (19), which together enclose a flat space (16).

8. Use of a column head according to one of Claims 1 - 7 in a chromatography column.

9. Method for establishing the liquid level in a column head according to one of Claims 5 to 7, **characterized in that** the liquid level is measured by the change in capacitance.

10. Method for establishing the liquid level in a column head according to one of Claims 5 to 7, **characterized in that** the liquid level is measured by the change in electrical conductivity or impedance.

## Revendications

1. Tête de colonne d'une colonne de chromatographie préparative comportant au moins un conduit pour l'éluant et/ou l'échantillon, une chambre à gaz (3) et une fritte (2) au-dessus du lit de sorbant, **caractérisée en ce que** l'on prévoit un dispositif (4) permettant d'alimenter la chambre à gaz (3) précitée par un gaz avec une surpression, le dispositif (4) précité étant disposé, de façon séparée, du conduit précité pour l'éluant et/ou l'échantillon.

2. Tête de colonne selon la revendication 1, **caractérisée en ce qu'**en outre au moins un conduit commun à l'éluant et à l'échantillon débouche dans la chambre à gaz.

3. Tête de colonne selon la revendication 1, **caractérisée en ce qu'**en outre au moins respectivement un conduit pour l'éluant et un conduit pour l'échantillon débouchent dans la chambre à gaz.

4. Tête de colonne selon l'une des revendications 1 à 3, **caractérisée en ce qu'**en outre les embouchures des conduits pour l'éluant et/ou l'échantillon sont réalisées sous la forme de têtes de pulvérisation.

5. Tête de colonne selon l'une des revendications 1 à 4, **caractérisée en ce qu'**en outre la tête de colonne est équipée d'au moins deux électrodes au moyen desquelles est mesuré le niveau du liquide dans la tête de colonne.

6. Tête de colonne selon la revendication 5, **caractérisée en ce qu'**en outre les électrodes sont formées de deux sous-frittes parallèles (15a) et (15b) électriquement conductrices enserrant un espace plat (16).

7. Tête de colonne selon la revendication 5, **caractérisée en ce qu'**en outre les électrodes sont formées des frittes (15) électriquement conductrices et d'un treillis métallique (19) enserrant ensemble un espace plat (16).

8. Utilisation d'une tête de colonne selon l'une des revendications 1 à 7 dans une colonne chromatographique.

9. Procédé pour déterminer le niveau du liquide dans une tête de colonne selon l'une des revendications 5 à 7, **caractérisé en ce que** le niveau du liquide est mesuré par le changement de la capacité.

10. Procédé pour déterminer le niveau du liquide dans une tête de colonne selon l'une des revendications 5 à 7, **caractérisé en ce que** le niveau du liquide est mesuré par le changement de la conductivité électrique ou de l'impédance.
